# EUROPEAN PATENT APPLICATION

(11) **EP 1 698 427 A1**
(43) Date of publication of application: **06.09.2006**
(21) Application number: 06003411.3
(22) Date of filing: 20.02.2006
(51) Int. Cl.: B23K 26/42, B23K 26/24, H01R 43/02

(54) **Laser beam welding structure, laser beam welding method, and vehicle control unit using the laser beam welding structure**

(30) Priority: 03.03.2005 JP 2005058430
(71) Applicant: HITACHI, LTD., Chiyoda-ku Tokyo 100-8280 (JP)
(72) Inventor: Onose, Shin, Tokyo 100-8220 (JP); Nakatani, Shinya, Tokyo 100-8220 (JP); Uraki, Keiichi, Tokyo 100-8220 (JP); Odakura, Yasunori, Hitachinaka-shi Ibaraki 312-0062 (JP)
(74) Representative: Beetz & Partner

(57) **Abstract**

The present invention relates to a laser beam welding structure for welding workpieces(1,2) by emitting laser beam(4) onto a work portion(6) of the workpieces (1,2), the size of the workpiece and resin member can be minimized and, when welding workpieces(1,2) by emitting laser beam(4) onto the work portion(6) of the workpieces(1,2), burning of the resin member covering the workpiece and located near the work portion(6), due to the reflected laser beam(3) caused from surface of a melting portion(6A) of the workpiece on the working portion(6) can be prevented.

In a laser beam welding structure for welding two workpieces(1,2) by emitting laser beam(4) onto the work portion(6) between the two workpieces(1,2), wherein resin members covering the workpieces(1,2) are provided at the position receiving the reflected laser beam(3) from surface of a melting portion(6A) on the working portion (6) when emitting laser beam(4) onto the work portion(6), resin members(5a,5b) capable of transmission of the reflected laser beam are employed for the resin member(5) located at the position receiving the reflected laser beam(3) so as to absorb the reflected laser beam (3) from surface of the melting portion (6A) when emitting laser beam(4) onto the work portion (6) between the two workpieces(1,2) and to prevent burning of the resin member(5).

## Description

### BACKGROUND OF THE INVENTION

### [Field of the Invention]

The present invention relates to a laser beam welding method for welding workpiece by emitting laser beam onto a work portion of the workpieces, particularly to a laser beam welding structure and laser beam welding method of two workpieces in which resin member is provided for covering the workpiece at the position receiving the reflected laser beam emitted onto the work portion.

### (Prior Art)

Two workpieces, for example, metallic terminals (wire or the like) protruding from a circuit board are overlapped or butted with each other and the overlapped or butted portion is welded to attain electrical connection. For connecting these two workpieces, welding by laser beam emitted onto the overlapped or butted portion has been employed.

Like in this case, two workpieces are covered with resin member except where stripped. If the resin member is located near a work portion on which laser beam is emitted, reflected laser beam is caused from surface of a melting portion when the laser beam is emitted onto the work portion of the workpieces and the reflected laser beam is emitted onto the resin component. Then, the reflected laser beam caused from surface of the melting portion in welding of the workpieces is absorbed into the resin member and heat is generated at the top surface of the resin member, resulting in burning of the resin member.

Accordingly, the laser beam welding method in the prior art, a preventive wall made of metal or ceramic etc. is installed between a work portion of the workpiece on which laser beam is emitted and a resin molded portion covered with resin member, so that the preventive wall enables to prevent a burning of the resin molded portion due to the reflected laser beam from the melting portion.

### [Patent Document 1] Japanese Application Patent Laid-open Publication No. HEI 11-333576 (Page 5, Fig. 4)

### SUMMARY OF THE INVENTION

### [Problems to be Solved by the Invention]

If the work portion is sandwiched by two resin members and so the distance between the two resin members is narrow and the work portion is located deep in the laser beam welding method of the Patent Document 1, there arises a problem that the laser beam interferes with the preventive wall and so suitable laser beam output cannot be emitted onto the work portion.

In addition, if the work portion is narrow and is located on a big and deep step in the laser beam welding method of the Patent Document 1, there arises a problem that the laser beam interferes with the preventive wall as the burning preventive means and so welding cannot be performed.

An object of the present invention is to provide a laser beam welding structure for welding workpieces by emitting laser beam onto the work portion of the workpieces that can minimize the size of the workpiece and resin member and, when welding a workpieces by emitting laser beam onto the work portion of the workpieces, prevents burning of the resin member covering the workpiece, located near the work portion, due to the reflected laser beam caused from surface of a melting portion formed on the work portion of the workpieces.

Another object of the present invention is to provide a laser beam welding method that prevents burning of the resin member covering the workpiece, located near the work portion, due to the reflected laser beam caused from surface of a melting portion formed on the work portion of the workpieces when welding a workpiece by emitting laser beam onto the work portion of the workpieces.

### [Means for Solving the Problems]

The laser beam welding structure of the present invention is the one for welding two workpieces by emitting laser beam onto the work portion of the two workpieces. A resin member may be provided for covering the workpiece at the position receiving the reflected laser beam from surface of a melting portion which is formed by emitting laser beam onto the work portion. The resin member provided at the position receiving the reflected laser beam may be capable of transmitting the reflected laser beam so as to absorb the reflected laser beam caused from surface of the melting portion and/or prevent burning of the resin member in case laser beam being emitted onto the work portion of the two workpieces.

In addition, the laser beam welding structure of the present invention is the one for welding two workpieces by emitting laser beam onto the work portion of the two workpieces. A resin member may be provided for covering the workpiece at the position receiving the reflected laser beam from surface of a melting portion which is formed by emitting laser beam onto the work portion. The resin member covering either one of the two workpieces may be capable of transmitting the reflected laser beam and/or the other workpiece is so provided with a step that the resin member covering the workpiece does not receive the reflected laser beam caused from surface of the melting portion so as to eliminate the effect of the reflected laser beam from the work portion and/or prevent burning of the resin member in case laser beam being emitted onto the work portion of the two workpieces.

Furthermore, the laser beam welding structure of the present invention is the one for welding two workpieces by emitting laser beam onto the work portion of the two workpieces. A resin member may be provided for covering the workpiece at the position receiving the reflected laser beam from surface of a melting portion which is formed by emitting laser beam onto the work portion. The two workpieces are so bent that the work portion may be positioned far enough and/or that the reflected laser beam from the work portion does not reach the resin member covering each workpiece in case of laser beam welding so as to eliminate the effect of the reflected laser beam caused from surface of the melting portion and/or prevent burning of the resin member in case laser beam being emitted onto the work portion of the two workpieces. The laser beam welding method of the present invention is the one for welding two workpieces by emitting laser beam onto the work portion of the two workpieces. A resin member may be provided for covering the workpiece at the position receiving the reflected laser beam from surface of a melting portion which is formed by emitting laser beam onto the work portion. The resin member provided at the position receiving the reflected laser beam may be made of a resin member capable of transmitting the reflected laser beam and welding is performed by emitting laser beam onto the work portion of the two workpieces.

### [Effects of the Invention]

According to the laser beam welding structure of the present invention, the size of the workpiece and resin member can be minimized and, when welding a workpiece by emitting laser beam onto the work portion of the workpiece, it becomes possible to prevent burning of the resin member covering the workpiece, located near the work portion, due to the reflected laser beam caused from surface of a melting portion which is formed by emitting laser beam onto the work portion of the workpieces.

According to the laser beam welding method of the present invention, it becomes possible, when welding a workpiece by emitting laser beam onto the work portion of the workpiece, to prevent burning of the resin member covering the workpiece, located near the work portion, due to the reflected laser beam caused from surface of a melting portion which is formed by emitting laser beam onto the work portion of the workpieces. The above mentioned features may be combined in any way partly or as a whole.

### BRIEF DESCRIPTION OF DRAWINGS

Fig. 1 is a cross-sectional view of the first embodiment of the present invention, in which resin member is located near the laser beam work portion.
Fig. 2 is a cross-sectional view of the second embodiment of the present invention, in which resin member is located near the laser beam work portion.
Fig. 3 is a cross-sectional view of the third embodiment of the present invention, in which resin member is located near the laser beam work portion.
Fig. 4 is a cross-sectional view of the fourth embodiment of the present invention, in which resin member is located near the laser beam work portion.
Fig. 5 is a cross-sectional view of the fifth embodiment of the present invention, in which resin member is located near the laser beam work portion.
Fig. 6 is a cross-sectional view of the sixth embodiment of the present invention, in which resin member is located near the laser beam work portion.
Fig. 7 is a partial cross-sectional front view showing the construction of a vehicle equipped with a control module.
Fig. 8 is a figure showing the detailed construction of the control module in Fig. 7.
Fig. 9 is a cross-sectional view A-A of Fig. 8.

### DETAILED DESCRIPTION OF THE INVENTION

### [Description of the Preferred Embodiments]

The present invention can be realized either by employing a resin member capable of transmission of reflected laser beam as the resin member installed at the position receiving the reflected laser beam so as to absorb the reflected laser beam caused from surface of a melting portion formed on a work portion when emitting laser beam onto the work portion of two workpieces or by bending the two workpiece in such a manner that the work portion is positioned far enough and so the reflected laser beam caused from surface of the melting portion does not reach the resin member covering each workpiece when welding the two workpieces by emitting laser beam.

### [Embodiment 1]

The preferred embodiments of the present invention are described hereunder.

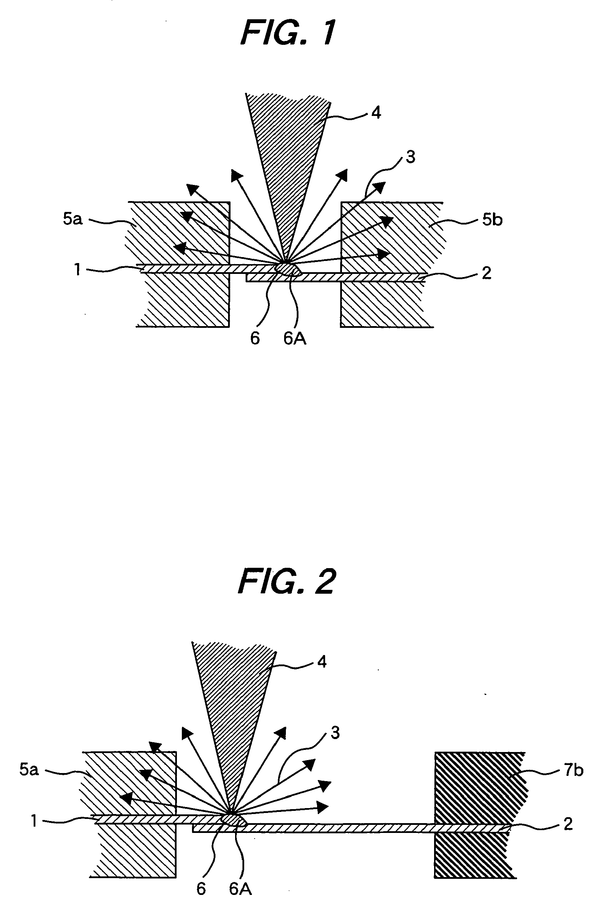

Fig. 1 shows the first embodiment of the laser beam welding structure and laser beam welding method according to the present invention.

In Fig. 1, a workpiece 1 is so constructed as to protrude from a resin member 5a, forming one part. A workpiece 2 is so constructed as to protrude from a resin member 5b, forming the other part. Both resin members 5a and 5b are made of resin capable of transmission of the reflected laser beam 3. In Fig. 1, the workpiece 1 protruding from the resin member 5a and workpiece 2 protruding from the resin member 5b are overlapped and the workpieces 1 and 2 are welded by emitting laser beam 4 onto a work portion 6 formed between the edge of the workpiece 1 and the surface of the workpiece 2 and forming a melting portion 6A by melting a part of material of the workpieces 1 and 2 on the work portion 6.

Upon welding by emitting the laser beam 4 onto the surface of the work portion 6 formed between the edge of the workpiece 1 and the surface of the workpiece 2, reflected laser beam 3 is caused from the surface of the melting portion 6A formed on the work portion 6. This reflected laser beam 3 is emitted onto the resin members 5a, 5b. The reflected laser beam 3 emitted onto the resin members 5a, 5b enters the surface of the resin members 5a, 5b and transmits to inside of the resin members 5a, 5b. As the reflected laser beam 3 transmits further to inside of the resin members 5a, 5b, it attenuates. In this embodiment, since the reflected laser beam 3 attenuates as it enters the surface of the resin members 5a, 5b and transmits further to inside, no local heat concentration is caused in the resin members 5a, 5b, thereby enabling to prevent burning of the resin members 5a, 5b and allowing stable welding.

### [Embodiment 2]

Fig. 2 shows the second embodiment of the laser beam welding structure and laser beam welding method according to the present invention.

In Fig. 2, a workpiece 1 is so constructed as to protrude from a resin member 5a, forming one part. A workpiece 2 is so constructed as to protrude from a resin member 7b, forming the other part. The resin members 5a is made of resin capable of transmission of the reflected laser beam 3 and the resin member 7b is made of resin not capable of transmission of the reflected laser beam 3. In Fig. 2, the workpiece 1 protruding from the resin member 5a and workpiece 2 protruding from the resin member 7b are overlapped and the workpieces 1 and 2 are welded by emitting laser beam 4 onto the surface of the work portion 6 formed between the edge of the workpiece 1 and the surface of the workpiece 2 and forming a melting portion 6A by melting a part of material of the workpieces 1 and 2 on the work portion 6.

In addition, the workpiece 2 forming the other part is protruding longer and so the work surface to be welded is located apart from the resin member 7b. The distance between the work surface and resin member 7b is long enough so as not to be affected by the reflected laser beam 3 caused from the surface of the melting portion.

Upon welding by emitting the laser beam 4 onto the surface of the work portion 6 formed between the edge of the workpiece 1 and the surface of the workpiece 2, reflected laser beam 3 is caused from the surface of the melting portion 6A formed on the work portion 6. This reflected laser beam 3 is emitted onto the resin member 5a. The reflected laser beam 3 emitted onto the resin member 5a enters the surface of the resin member 5a and transmits to inside of the resin member 5a. As the reflected laser beam 3 transmits further to inside of the resin member 5a, it attenuates. In this embodiment, since the reflected laser beam 3 attenuates as it enters the surface of the resin member 5a and transmits further to inside, no local heat concentration is caused in the resin member 5a, thereby enabling to prevent burning of the resin member 5a and allowing stable welding.

On the other hand, as the reflected laser beam 3 to be reflected towards the resin member 7b made of resin not capable of transmission scatters, no reflected laser beam 3 concentrates on the resin member 7b, and so no local heat concentration is caused in the resin member 7b. Accordingly, burning of the resin member 7b can be prevented and stable welding becomes available.

### [Embodiment 3]

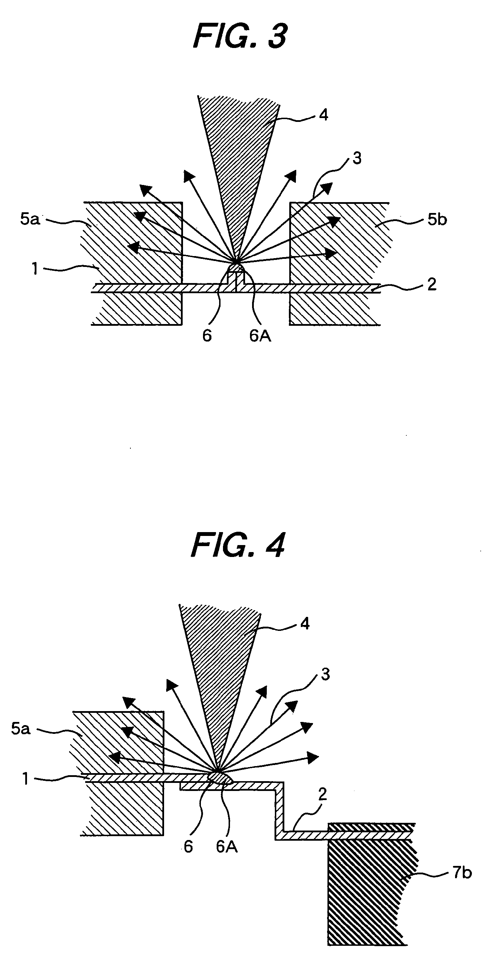

Fig. 3 shows the third embodiment of the laser beam welding structure and laser beam welding method according to the present invention.

In Fig. 3, a workpiece 1 is so constructed as to protrude from a resin member 5a, forming one part. A workpiece 2 is so constructed as to protrude from a resin member 5b, forming the other part. The tip of the workpiece 1 is bent upward. The tip of the workpiece 2 is also bent upward so that it can be butted with the tip of the workpiece 1. In Fig. 3, the bend tip of the workpiece 1 and bent tip of the workpiece 2 are butted with each other. The workpieces 1 and 2 are welded by emitting laser beam 4 onto the surface of the work portion 6 formed between the bent tip of the workpiece 1 and bent tip of the workpiece 2 and forming a melting portion 6A by melting a part of material of the workpieces 1 and 2 on the work portion 6. The resin members 5a, 5b are made of resin capable of transmission of the reflected laser beam 3 .

Upon welding by emitting the laser beam 4 onto the surface of the work portion 6 formed between the butted tips of the workpiece 1 and workpiece 2, reflected laser beam 3 is caused from the surface of the melting portion 6A on the work portion 6. This reflected laser beam 3 is emitted onto the resin members 5a, 5b. The reflected laser beam 3 emitted onto the resin members 5a, 5b enters the surface of the resin members 5a, 5b and transmits to inside of the resin members 5a, 5b. As the reflected laser beam 3 transmits further to inside of the resin members 5a, 5b, it attenuates. In this embodiment, since the reflected laser beam 3 attenuates as it enters the surface of the resin members 5a, 5b and transmits further to inside, no local heat concentration is caused in the resin members 5a, 5b, thereby enabling to prevent burning of the resin members 5a, 5b, and allowing stable welding.

### [Embodiment 4]

Fig. 4 shows the fourth embodiment of the laser beam welding structure and laser beam welding method according to the present invention.

In Fig. 4, a workpiece 1 is so constructed as to protrude from a resin member 5a, forming one part. A workpiece 2 is so constructed as to protrude from a resin member 7b, forming the other part. The resin members 5a is made of resin capable of transmission of the reflected laser beam 3 and the resin member 7b is made of resin not capable of transmission of the reflected laser beam 3. In Fig. 4, the workpiece 1 protruding from the resin member 5a and workpiece 2 protruding from the resin member 7b are overlapped and the workpieces 1 and 2 are welded by emitting laser beam 4 onto the surface of the work portion 6 formed between the edge of the workpiece 1 and the surface of the workpiece 2 and forming a melting portion 6A by melting a part of material of the workpieces 1 and 2 on the work portion 6.

The workpiece 2 is bent downward like a hook near the overlapped portion with the workpiece 1 so as to form a step. This step is made enough so as not to be affected by the reflected laser beam 3 caused from the surface of the melting portion in laser beam welding.

Upon welding by emitting the laser beam 4 onto the surface of the work portion 6 formed between the edge of the workpiece 1 and the surface of the workpiece 2, reflected laser beam 3 is caused from the surface of the melting portion 6A on the work portion 6. This reflected laser beam 3 is emitted onto the resin member 5a. The reflected laser beam 3 emitted onto the resin member 5a enters the surface of the resin member 5a and transmits to inside of the resin member 5a. As the reflected laser beam 3 transmits further to inside of the resin member 5a, it attenuates. In this embodiment, since the reflected laser beam 3 attenuates as it enters the surface of the resin member 5a and transmits further to inside, no local heat concentration is caused in the resin member 5a, thereby enabling to prevent burning of the resin member 5a, and allowing stable welding.

On the other hand, since a step is formed on the workpiece 2, the reflected laser beam 3 to be reflected towards the resin member 7b made of resin not capable of transmission does not reach the resin member 7b because of this step, and so no local heat concentration is caused in the resin member 7b. Accordingly, burning of the resin member 7b can be prevented and stable welding becomes available.

### [Embodiment 5]

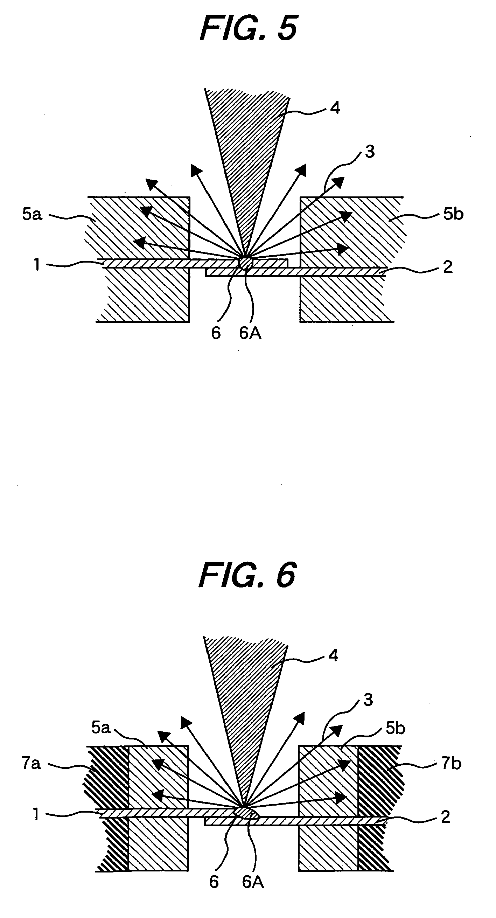

Fig. 5 shows the fifth embodiment of the laser beam welding structure and laser beam welding method according to the present invention.

In Fig. 5, a workpiece 1 is so constructed as to protrude from a resin member 5a, forming one part. A workpiece 2 is so constructed as to protrude from a resin member 5b, forming the other part. Both resin members 5a and 5b are made of resin capable of transmission of the reflected laser beam 3. In Fig. 5, the workpiece 1 protruding from the resin member 5a and workpiece 2 protruding from the resin member 5b are overlapped and the workpieces 1 and 2 are welded by emitting laser beam 4 onto the surface of the work portion 6 formed between the each surface of the workpiece 1 and workpiece 2 forming a melting portion 6A by melting a part of material of the workpieces 1 and 2 on the work portion 6.

Upon welding by emitting the laser beam 4 onto the surface of the work portion 6 formed between the each surface of the workpiece 1 and workpiece 2, reflected laser beam 3 is caused from the surface of the melting portion 6A on the work portion 6. This reflected laser beam 3 is emitted onto the resin members 5a, 5b. The reflected laser beam 3 emitted onto the resin members 5a, 5b enters the surface of the resin members 5a, 5b and transmits to inside of the resin members 5a, 5b. As the reflected laser beam 3 transmits further to inside of the resin members 5a, 5b, it attenuates. In this embodiment, since the reflected laser beam 3 attenuates as it enters the surface of the resin members 5a, 5b and transmits further to inside, no local heat concentration is caused in the resin members 5a, 5b, thereby enabling to prevent burning of the resin members 5a, 5b, and allowing stable welding.

### [Embodiment 6]

Fig. 6 shows the sixth embodiment of the laser beam welding structure and laser beam welding method according to the present invention.

In Fig. 6, a workpiece 1 is so constructed as to protrude from a resin member 7a, forming one part. A workpiece 2 is so constructed as to protrude from a resin member 7b, forming the other part. In Fig. 6, the workpiece 1 protruding from the resin member 7a and workpiece 2 protruding from the resin member 7b are overlapped and the workpieces 1 and 2 are welded by emitting laser beam 4 onto the surface of the work portion 6 formed between the edge of the workpiece 1 and the surface of the workpiece 2 and forming a melting portion 6A by melting a part of material of the workpieces 1 and 2 on the work portion 6. Both resin members 7a and 7b are made of resin not capable of transmission of the reflected laser beam 3. In addition, the resin members 7a, 7b are provided with resin members 5a, 5b made of resin capable of transmission of the reflected laser beam 3 on their work portion side, respectively.

Upon welding by emitting the laser beam 4 onto the surface of the work portion 6 formed between the edge of the workpiece 1 and the surface of the workpiece 2, reflected laser beam 3 is caused from the surface of the melting portion 6A on the work portion 6. This reflected laser beam 3 is emitted onto the resin members 5a provided on the work portion side of the resin member 7a and resin member 5b provided on the work portion side of the resin member 7b. The reflected laser beam 3 emitted onto the resin members 5a, 5b enters the surface of the resin members 5a, 5b and transmits to inside of the resin members 5a, 5b. As the reflected laser beam 3 transmits further to inside of the resin members 5a, 5b, it attenuates. In this embodiment, since the reflected laser beam 3 attenuates as it enters the surface of the resin members 5a, 5b and transmits further to inside, no local heat concentration is caused in the resin members 5a, 5b, thereby enabling to prevent burning of the resin members 5a, 5b, and allowing stable welding.

### [Embodiment 7]

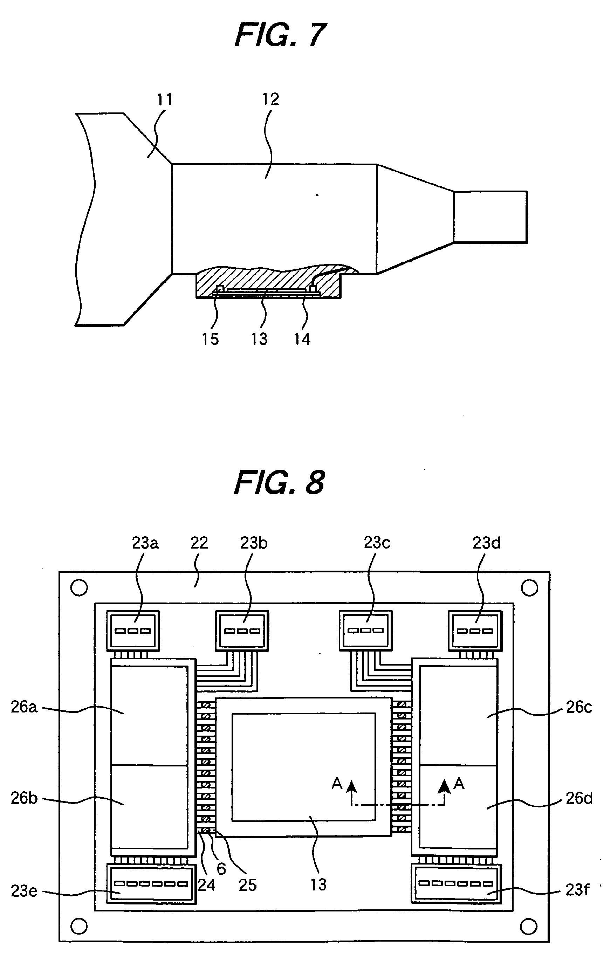

Fig. 7 shows a vehicle engine 11 connected with a transmission 12 to which the laser beam welding structure and laser beam welding method of the present invention applies.

In Fig. 7, a hydraulic control unit 14 is provided at the bottom inside the housing of the transmission 12. This hydraulic control unit 14 is to control the hydraulic pressure for the shift control of the clutch installed inside the transmission 12 or the like. There are also provided a solenoid valve 15 and control module 13 fixed on the hydraulic control unit 14. The connector of the solenoid valve 15 is connected with the connector of the control module 13.

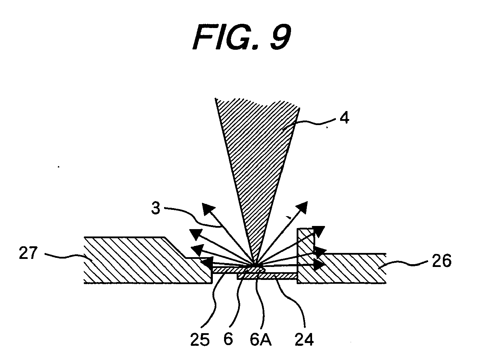

Fig. 8 shows the detail of the hydraulic control unit 14 shown in Fig. 7. On the base 22 of the hydraulic control unit 14, a bus bar 24 is fixed with insulation molds 26a, 26b, 26c, 26d and connectors 23a, 23b, 23c, 23d, 23e, 23f. In addition, the terminal 25 of the control module 13 is welded and connected with the bus bar 24 at the work portion 6 by laser beam welding.

Fig. 9 shows a cross-section A-A of Fig. 8. The terminal 25 of the control module 13 and bus bar 24 are connected by laser beam 4 welding as shown in Fig. 9. As shown in the figure, the terminal 25 of the control module 13 protruding from the resin member 27 capable of transmission of the reflected laser beam 3 and the bus bar 24 protruding from the resin mold 26 capable of transmission of the reflected laser beam 3 are overlapped and then welded to connect by emitting laser beam 4 onto the work portion 6 formed between the edge of the terminal 25 and the surface of the bus bar 24 located near the resin member and forming a melting portion 6A by melting a part of material of the bus bar 24 and the terminal 25 on the work portion 6. The reflected laser beam 3 caused from the surface of the melting portion 6A on the work portion 6 in this welding attenuates as it enters the surface of the resin member 27 and resin mold 26 and transmits to inside of the resin member and the resin mold. Since no local heat concentration is caused, burning of the resin member 27 and resin mold 26 can be prevented and stable welding becomes available.

### [Possible industrial application]

The laser beam welding structure and laser beam welding method of the present invention are applicable not only to the laser beam welding of a work portion between the terminal of a control module of hydraulic control unit and bus bar protruding from a resin member but also to any connection of a terminal protruding from a resin member with another by emitting laser beam.
The above features and embodiments can be combined in any way, partly or as a whole.

## Claims

1. A laser beam welding structure for welding two workpieces by emitting laser beam onto a work portion of the two workpieces(1,2), in which resin member(5a,5b) is provided for covering the workpiece at the position receiving the reflected laser beam(3) emitted onto the work portion(6); wherein
the resin member(5a,5b) is provided at the position receiving the reflected laser beam(3) from a melting portion to be formed by emitting laser beam(4) onto the work portion(6) and employed for a resin capable of transmitting the reflected laser beam(3).

2. A laser beam welding structure according to Claim 1, wherein
the resin member covering either one of the two workpieces(1,2) is capable of transmitting the reflected laser beam(3) and the other workpiece is so provided with a step that the resin member covering the workpiece not to receive the reflected laser beam(3) from the melting portion so as to eliminate the effect of the reflected laser beam(3) from the melting portion.

3. A laser beam welding structure according to Claim 1 or 2, wherein
the two workpieces are so bent that the work portion(6) is positioned far enough and that the reflected laser beam(3) from the melting portion(6A) not to reach the resin member covering each workpiece in case of laser beam welding so as to eliminate the effect of the reflected laser beam(3) from the melting portion(6A).

4. A laser beam welding structure according to at least one of Claims 1-3, wherein the resin member(5a,5b) capable of reflected laser beam transmission used to cover the workpiece constitutes at least a portion of the resin member covering the workpiece and receiving the effect of the reflected laser beam(3).

5. A laser beam welding method for welding two workpieces (1,2) by emitting laser beam(4) onto a work portion(6) of the two workpieces(1,2), in which resin member is provided for covering the workpiece at the position receiving the reflected laser beam(3) emitted onto the work portion(6); wherein
the resin member provided at the position
receiving the reflected laser beam(3) is employed for a resin member capable of transmission of the reflected laser beam(3) and welding is performed by emitting laser beam(4) onto the work portion(6) of the two workpieces(1,2).

6. A vehicle control unit equipped with a laser beam welding structure according to at least one of Claims 1-4.
